# FASCICULE DE BREVET EUROPEEN

(11) **EP 2 342 128 B1**
(45) Date de publication et mention de la délivrance du brevet: **25.06.2014**
(21) Numéro de dépôt: 09784333.8
(22) Date de dépôt: 05.08.2009
(51) Int. Cl.: B64D 27/26, B64D 29/06

(54) **NACELLE COMPRENANT UN MÂT ADAPTÉ POUR SUPPORTER UN TURBORÉACTEUR D'AÉRONEF**
GONDEL UMFASSEND EINE ZUR ABSTÜTZUNG EINES FLUGZEUGTURBOSTRAHLTRIEBWERKS AUSGEFÜHRTE STREBE
NACELLE COMPRISING A STRUT DESIGNED TO SUPPORT AN AIRCRAFT TURBOJET ENGINE

(30) Priorité: 01.10.2008 FR 0805420; 09.03.2009 FR 0901071
(43) Date de publication de la demande: 13.07.2011
(73) Titulaire: Aircelle, 76700 Gonfreville l'Orcher (FR)
(72) Inventeur: CARUEL, Pierre, F-76600 Le Havre (FR); VAUCHEL, Guy, Bernard, F-76600 Le Havre (FR)
(74) Mandataire: Gaillarde, Frédéric F. Ch.
(86) Numéro de dépôt international: PCT/FR2009/000981
(87) Numéro de publication internationale: WO 2010/037917

(56) Documents cités:
- WO-A-2008/043903
- FR-A- 2 732 947
- FR-A- 2 873 987
- FR-A- 2 891 526
- US-A- 4 044 973

## Description

La présente invention se rapporte à une nacelle comprenant un mât adapté pour supporter un turboréacteur d'aéronef.

Comme cela est connu de la technique antérieure, un turboréacteur d'aéronef est logé à l'intérieur d'une nacelle et relié à un mât permettant la suspension de l'ensemble propulsif ainsi constitué sous une aile d'aéronef, voir le document FR-A-2 891 526.

Des bielles de reprise de poussée sont interposées entre le mât et le moteur du turboréacteur, de manière à reprendre les efforts engendrés par la poussée du moteur.

Dans les ensembles propulsifs de la technique antérieure, ces bielles sont soumises à des températures très élevées engendrées notamment par la chambre de combustion du moteur, ce qui nécessite l'utilisation d'alliages d'acier particuliers, dont le poids est important.

La présente invention a notamment pour but de fournir des moyens permettant l'utilisation de matériaux moins lourds pour les bielles de reprise de poussee.

On atteint ce but de l'invention avec une nacelle comprenant un mât selon la revendication 1.

De par la forme particulière de sa partie caissonnée, un tel mât est apte à envelopper les bielles de reprise de poussée, et ainsi à protéger celles-ci du rayonnement et de la convection de la chaleur émise par le moteur : ces bielles peuvent donc être réalisées dans des matériaux moins résistants à la chaleur et plus légers, tels que le titane, l'aluminium ou des matériaux composites.

A noter que cette protection vis-à-vis de la chaleur émise par le moteur permet également de réaliser une partie du mât en matériaux composites, et donc de réduire encore le poids de l'ensemble.

La forme caissonnée du mât permet en outre une maximisation de l'inertie en torsion de ce mât, et donc une reprise optimale du moment engendré par le moteur : on peut de la sorte réduire le dimensionnement de l'attache arrière du moteur qui reprend habituellement ce moment, ce qui contribue à la réduction de poids et du culot du mât, réduisant la taille de la structure nécessaire à son carénage, d'où des gains de traînée aérodynamique.

A noter encore que le fait que la partie caissonnée du mât soit conformée pour remplacer la partie supérieure de la structure interne fixe de la nacelle, permet de s'affranchir de la complexité de réalisation de cette partie, complexité liée au fait que cette partie présente une courbure inverse de celle du reste de la structure fixe.

Suivant des caractéristiques optionnelles du mât selon l'invention :
- ladite partie caissonnée comprend des orifices de ventilation : ces orifices permettent de refroidir les bielles de reprise de poussée situées à l'intérieur de la partie caissonnée afin de compenser l'apport de chaleur du moteur ;
- ladite partie de liaison comprend une traverse supportant des cônes de liaison avec ledit carter de soufflante ;
- ladite partie caissonnée comporte des platines de liaison audit générateur de gaz.

La présente invention se rapporte également à une nacelle pour turboréacteur d'aéronef incorporant un mât conforme à ce qui précède dans sa partie aval, dans laquelle la partie de liaison du mât est adaptée pour être fixée sur ledit carter de soufflante ou sur ledit carter du générateur de gaz, et des bielles de reprise de poussée s'étendent à l'intérieur de la partie caissonnée de ce mât pour coopérer avec ledit carter de générateur de gaz.

Suivant des caractéristiques optionnelles de cette nacelle selon l'invention :
- ladite nacelle pour turboréacteur d'aéronef incorpore un mât conforme à ce qui précède dans sa partie aval, et est dépourvue de bielles de reprise de poussée à l'intérieur de ladite partie caissonnée, la poussée moteur étant reprise directement par le structure caissonnée ;
- ladite partie aval comprend un inverseur de poussée à grilles : un tel inverseur, très couramment utilisé, permet de réduire la distance de freinage de l'aéronef ;
- ledit inverseur comprend une structure de support de grilles comprenant deux moitiés supérieures fixées sur ledit carter de soufflante et reliées entre elles par des bielles traversant la partie de liaison dudit mât : ces bielles permettent de conférer la rigidité nécessaire à l'ensemble, et de reprendre les efforts de gonflement (« hoop load ») ;

- ladite structure de support de grilles comprend en outre deux moitiés inférieures montées pivotantes sur lesdites moitiés supérieures entre une position de service et une position de maintenance : ces deux moitiés inférieures pivotantes permettent un accès facile au moteur pour les opérations de maintenance ;
- lesdites moitiés inférieures incorporent des panneaux amonts définissant la partie inférieure amont de la structure interne fixe de la nacelle, en complément de ladite partie caissonnée : l'intégration de ces panneaux amonts aux moitiés inférieures de la structure de support de grilles permet d'ouvrir ces panneaux en même temps que ces moitiés inférieures, ce qui limite le nombre d'opérations nécessaires pour accéder au moteur ;
- ladite nacelle comprend en outre un panneau quasi-circulaire définissant la partie inférieure aval de la structure interne fixe de la nacelle, ce panneau étant monté coulissant sur ladite partie caissonnée entre une position de service dans laquelle il est jointif avec lesdits panneaux amonts, et une position de maintenance dans laquelle il est écarté en aval desdits panneaux amonts : ce panneau coulissant permet un dégagement optimal du moteur pour les opérations de maintenance ;
- ladite nacelle comprend un capot monté coulissant sur la partie de liaison dudit mât entre une position de jet direct, dans laquelle ce capot recouvre lesdites grilles, et une position de jet inversé, dans laquelle ce capot découvre ces grilles ;
- ledit capot comprend deux moitiés supérieures montées coulissantes sur la partie de liaison dudit mât, coopérant avec au moins deux actionneurs supérieurs, et une partie inférieure montée coulissante sur lesdites moitiés supérieures entre une position amont de service et une position aval de maintenance : ce mode de réalisation du capot permet de faire coulisser la partie inférieure en aval des moitiés supérieures lorsque ces dernières se trouvent en position de jet inversé, ce qui facilite l'accès au moteur pour les opération de maintenance ;
- ladite nacelle comprend un actionneur inférieur coopérant avec ladite partie inférieure de capot : dans ce mode de réalisation particulier, il est nécessaire de déconnecter l'actionneur inférieur de la partie inférieure de capot avant de faire coulisser cette dernière pour les opérations de maintenance ;
- ladite nacelle comprend un cadre reliant entre elles lesdites deux moitiés supérieures de capot, et un actionneur inférieur coopérant avec ce cadre : dans ce mode de réalisation, il n'est pas nécessaire de déconnecter l'actionneur inférieur de la partie inférieure de capot avant de faire coulisser cette dernière pour les opérations de maintenance.
- ladite nacelle comprend un inverseur de poussée à portes comprenant deux demi-panneaux définissant la structure interne fixe de la nacelle, ces demi-panneaux étant mobiles entre une position de service et une position de maintenance au moyen d'un système de bielles et de glissières ;
- ladite nacelle est du type à veine de flux secondaire en S, et comprend deux demi-panneaux de structure interne articulés sur ledit mât et deux demi-capots-mobiles montés coulissants sur des rails montés eux-mêmes pivotants sur ledit mât ;
- ladite nacelle comprend deux demi-panneaux et deux demi-anneaux définissant la structure interne fixe de la nacelle, et deux demi-capots mobiles munis de volets d'inversion de poussée sur leurs bords de fuite, reliés par des bielles auxdits demi-anneaux, lesdits demi-panneaux étant articulés sur ledit mât, et les ensembles formés par lesdits demi-capots mobiles et par lesdits demi-anneaux étant montés coulissants sur des rails montés eux-mêmes pivotants sur ledit mât.

La présente invention se rapporte également à un ensemble propulsif comprenant une nacelle conforme à ce qui précède, et un turboréacteur logé à l'intérieur de cette nacelle et coopérant avec ledit mât.

D'autres caractéristiques et avantages de la présente invention apparaîtront à la lumière de la description qui va suivre, et à l'examen des figures ci-annexées dans lesquelles :
- la figure 1 représente, en perspective, un turboréacteur d'aéronef suspendu à un mât selon l'invention,
- la figure 2 représente une vue en perspective sous un autre angle du mât de la figure 1,
- la figure 3 représente l'ensemble de la figure 1 équipé de son inverseur de poussée à grilles, ce dernier se trouvant en position «jet inversé », -0
- la figure 4 représente l'ensemble de la figure 3 dans lequel la partie inférieure du capot d'inverseur de poussée a été coulissée vers une position de maintenance,
- la figure 5 représente l'ensemble de la figure 4 dans lequel les moitiés inférieures de la structure de support de grilles ont été ouvertes vers une position de maintenance,
- la figure 6 est une vue en perspective de l'ensemble formé par le mât de la figure 2 et le capot de l'inverseur de poussée, les autres organes (moteur et support de grilles) ayant été ôtés,
- la figure 7 est une vue schématique en coupe transversale de l'ensemble formé par le mât, le capot d'inverseur de poussée, le moteur et une structure interne fixe,
- la figure 8 est une vue en perspective d'un mode de réalisation particulier de l'ensemble propulsif selon l'invention, la partie inférieure du capot d'inverseur de poussée ayant été ôtée,
- la figure 9 est une vue en perspective de l'arrière de l'ensemble propulsif selon l'invention, le capot de l'inverseur de poussée ayant été ôté,
- la figure 10 est une vue analogue à celle de la figure 9, les moitiés inférieures de la structure de support de grilles et la structure interne fixe étant représentées en position de maintenance,
- la figure 11 est une vue de détail, en perspective, d'un mode de réalisation particulier de la liaison entre le mât et le turboréacteur,
- la figure 12 est vue en perspective, sous un autre angle, du mât de la figure 11,
- les figures 13 et 14 sont des vues analogues à celles de la figure 12, indiquant différentes implantations possibles de moyens de liaison du mât au turboréacteur,
- la figure 15 est une vue schématique, en coupe transversale par rapport à l'axe du turboréacteur, des moyens de liaison du mât des figures 11 à 14 avec le carter de soufflante du turboréacteur,
- la figure 16 est une vue en perspective d'un opérateur en train d'ouvrir la structure interne d'un ensemble propulsif selon l'invention, comprenant un inverseur de poussée du type à portes,
- la figure 17 est une vue en perspective de l'opérateur en train d'accéder au turboréacteur de l'ensemble propulsif de la figure 16 par la porte de l'inverseur de cet ensemble,
- la figure 18 est une vue en perspective d'un ensemble propulsif dont la nacelle comprend un inverseur de poussée d'un autre type, à savoir à volets situés sur le bord de fuite du capot mobile d'inverseur,
- la figure 19 est une vue en perspective de l'ensemble de la figure 18, le capot mobile ayant été ôté à des fins explicatives,
- la figure 20 est vue en perspective de l'ensemble de la figure 18, le capot mobile et la partie aval de la structure interne fixe de la nacelle ayant été ôtés à des fins explicatives, et les deux moitiés amont de la structure interne fixe étant représentées en position ouverte de maintenance, et
- les figures 21 et 22 sont des vues respectivement de derrière et en perspective de l'ensemble propulsif des figures 18 à 20, une moitié de l'inverseur de poussée étant représentée en position de maintenance, avec un opérateur en train d'intervenir sur le turboréacteur.

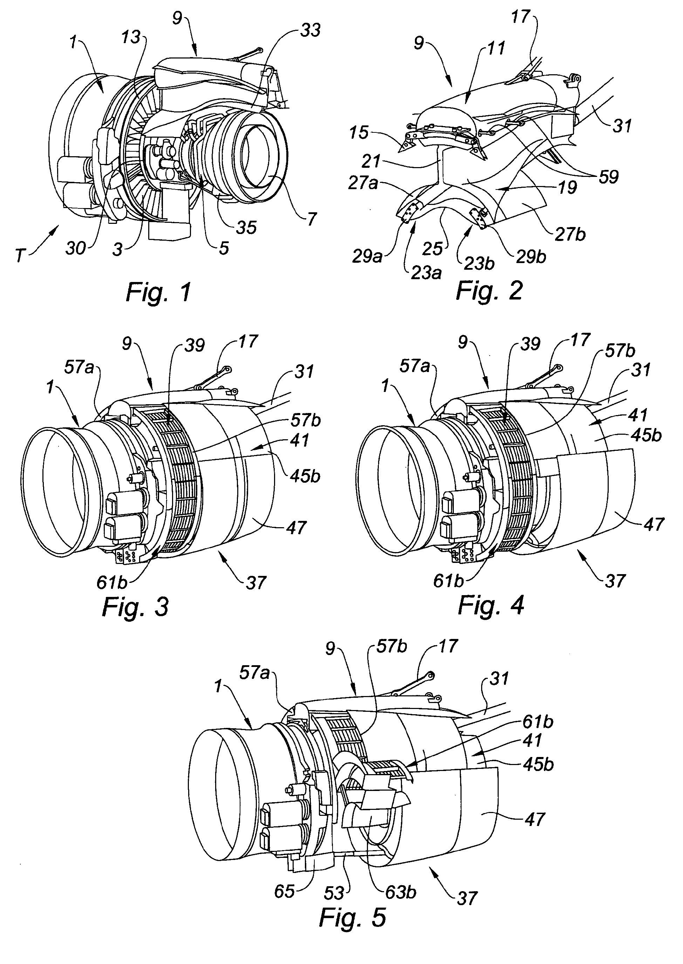

En se reportant à la figure 1, on peut voir un turboréacteur T d'aéronef comportant typiquement, de l'amont vers l'aval par rapport au sens d'écoulement de l'air, un carter de soufflante 1, une soufflante 3, un générateur de gaz 5 et un carter d'éjection des gaz chauds 7.

Un mât 9 selon l'invention est fixé sur ce générateur de gaz en plusieurs points, comme cela va être expliqué à présent.

Comme on peut le voir sur la figure 2, ce mât 9 comprend une partie supérieure 11 (c'est-à-dire destinée à être positionnée au-dessus du générateur de gaz en situation de fonctionnement) permettant de réaliser la liaison entre le bord aval 13 du carter de soufflante 1 (ou le générateur de gaz 5) et une aile d'aéronef (non représentée).

Afin de remplir cette fonction de liaison, cette partie 11 comporte en amont des ferrures 15 destinées à être fixées sur le bord aval 13 du carter 1 (dans le cas d'une suspension avant reliée au carter de soufflante),.

Cette partie de liaison 11 se prolonge, dans sa zone inférieure, par une partie caissonnée 19 présentant sensiblement une section en « Y » inversé.

Précisément, comme cela est visible sur la figure 2, la partie centrale 21 du Y s'étend sous la partie de liaison 11, et cette partie centrale 21 bifurque en deux parties 23a, 23b, définissant les deux branches du « Y ».

Ces deux parties 23a, 23b, définissent un caisson, c'est-à-dire une partie creuse comprenant une paroi centrale inférieure 25 et deux parois latérales supérieures, 27a, 27b.

La partie amont du caisson 19 est destinée à coopérer avec la partie amont du générateur de gaz 5.

Plus précisément, et comme cela est visible sur la figure 2, des bielles de reprise de poussée 29a, 29b, s'étendant à l'intérieur du caisson 19, sont fixées sur la partie amont du générateur de gaz 5.

Dans leur partie aval, cachée sur la figure 2, ces bielles sont typiquement reliées à un palonnier central de reprise de poussée 31, lui-même destiné à être relié au mat réacteur fixé sous l'aile de l'aéronef.

Comme cela est visible sur la figure 1, la partie aval du mât 9 est quant à elle fixée à l'arrière 33 du générateur de gaz 5 par l'intermédiaire d'une suspension arrière classique.

Lorsque le moteur est suspendu au mât 9, les deux parties latérales 23a, 23b du caisson 19 forment une partie de la structure interne fixe de la nacelle (souvent désignée par « IFS » - pour « Internal Fixed Structure »), carénant le générateur de gaz 5 et les organes 35 fixés à sa périphérie.

En se reportant à la figure 3, on peut voir l'ensemble de la figure 1 sur lequel a été ajouté un système d'inverseur de poussée à grilles 37, formant la partie aval de la nacelle entourant le turboréacteur T (la partie amont de cette nacelle comprenant une entrée d'air, et la partie intermédiaire de cette nacelle comprenant des capots entourant le carter de soufflante 1 n'ayant été représentée sur les figures ci-jointes).

Comme cela est connu en soi, le système d'inverseur de poussée à grilles 37 comprend une structure de support de grilles 39, fixe, et un capot coulissant 41, monté coulissant sur le mât 9 entre une position dite « jet direct » dans laquelle il recouvre la structure 39, et une position dite « jet inversé », représentée sur la figure 3, dans laquelle ce capot découvre la structure 39.

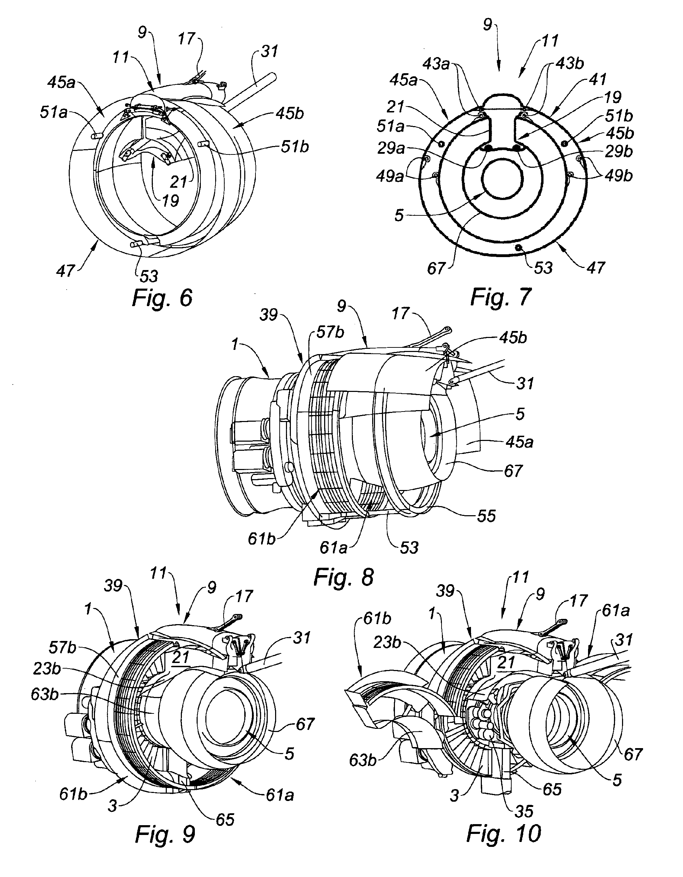

Plus précisément, comme cela est visible sur les figures 6 et 7, le capot coulissant 41 est monté coulissant sur le mât 9 par l'intermédiaire de rails appropriés 43a, 43b.

De préférence, comme cela est visible sur les figures 6 et 7, ce capot coulissant 41 comporte deux moitiés supérieures 45a, 45b, montées chacune coulissante sur le mât 9, et une partie inférieure 47 montée coulissante sur les moitiés supérieures 45a, 45b par l'intermédiaire de rails appropriés 49a, 49b.

Au moins deux actionneurs supérieurs 51 a, 51 b, reliés à la structure de support de grilles 39, permettent d'actionner les moitiés supérieures de capot 45a, 45b, entre la position « jet direct » et la position « jet inversé ».

Un actionneur inférieur 53, relié au bord aval 13 du carter de soufflante 1, permet quant à lui d'agir sur la partie inférieure 47 du capot 41.

A noter qu'en situation de service, c'est-à-dire en situation de fonctionnement normal, la partie inférieure du capot 47 est verrouillée aux deux moitiés supérieures 45a, 45b.

En situation de maintenance, et comme cela est visible sur les figures 4 et 5, la partie inférieure 47 du capot 41 est déverrouillée des deux moitiés supérieures 45a, 45b, de manière à pouvoir être coulissée en aval de ces deux moitiés supérieures vers une position de maintenance permettant l'accès au générateur de gaz 5.

A noter que ce coulissement de la partie inférieure 47 du capot 41 suppose une déconnexion de cette partie inférieure de l'actionneur inférieur 53.

En variante, représentée à la figure 8, on voit que l'on peut prévoir un cadre 55 reliant entre elles les deux moitiés supérieures 45a, 45b et coopérant avec l'actionneur inférieur 53.

Dans cette variante particulière, il n'est donc pas nécessaire de déconnecter la partie inférieure 47 du capot mobile pour amener cette partie inférieure vers sa position de maintenance visible à la figure 4.

On s'intéresse à présent plus particulièrement à la structure de support de grilles 39.

Comme cela est visible sur l'ensemble des figures 3, 4, 5, 8, 9, et 10, cette structure de support comporte en fait deux moitiés supérieures 57a, 57b, fixées au bord aval 13 du carter de soufflante 1, ou éventuellement formées d'un seul bloc avec ce carter de soufflante.

Ces deux moitiés supérieures sont reliées entre elles par des bielles 59, traversant la partie de liaison 11 du mât 9, permettant de rigidifier l'ensemble ainsi obtenu.

Sur ces moitiés supérieures fixes 57a, 57b de la structure de support 39 sont montées pivotantes des moitiés inférieures respectives 61 a, 61 b de la structure de support de grilles 39.

Comme cela est particulièrement visible sur les figures 5 et 10, chaque moitié inférieure 61 a, 61b de la structure 39 incorpore un panneau amont 63a, 63b, venant se positionner dans le prolongement de la paroi respective 27a, 27b de la partie caissonnée 19, du mât 9.

Ces panneaux amont 63a, 63b constituent donc, avec les parois latérales supérieures 27a, 27b, la partie amont de la structure interne fixe « IFS » de la nacelle, enveloppant la partie amont du générateur de gaz 5 et définissant une partie de la veine de circulation de l'air frais en provenance de la soufflante 3.

Comme cela est visible sur les figures 9 et 10, les panneaux 63a, 63b sont de préférence carénés pour recouvrir le bras inférieur 65 du carter de soufflante (ainsi que les bras situés à 4 heures et à 8 heures, selon la terminologie utilisée habituellement pour indiquer la position angulaire d'organes sur une nacelle - le mât 9 se trouvant à 12 heures et le bras inférieur 65 se trouvant à 6 heures).

Des moyens de verrouillage appropriés, non représentés, sont bien entendu prévus pour maintenir les deux moitiés inférieures 61 a, 61 b de la structure de support 39 dans leur position normale de service représentée à la figure 9.

On va s'intéresser à présent plus particulièrement à la partie aval de la structure interne fixe (« IFS »), et l'on se reporte pour cela plus particulièrement aux figures 8 à 10.

Comme on peut le voir sur ces figures, cette partie aval 67, située dans le prolongement de la partie amont formée d'une part par les deux parois latérales supérieures 27a, 27b de la partie caissonnée 19 et d'autre part par les deux panneaux 63a, 63b, est elle-même formée par un panneau quasi annulaire venant dans le prolongement des deux parois latérales 27a, 27b.

Ce panneau quasi annulaire peut être monté coulissant sur la partie caissonnée 19 du mât 9 entre une position normale de service, représentée sur les figures 8 et 9, dans laquelle ce panneau recouvre les organes 35 situés à la périphérie du générateur de gaz 5, et une position de maintenance représentée à la figure 10, dans laquelle ce panneau 67 libère l'accès aux organes 35.

Comme on peut donc le comprendre, lorsque la partie inférieure 47 du capot 41 a été placée en position de maintenance (Figure 5), et lorsque les deux moitiés inférieures 61 a, 61 b de la structure de support de grilles 39 sont placées en position ouverte (Figure 5) et lorsque le panneau 67 a été coulissé vers sa position aval de maintenance (voir Figure 10), l'accès pour un opérateur au générateur de gaz 5, et en particulier aux organes 35 qui l'entourent, est très aisé.

Lorsqu'on souhaite déposer entièrement le turboréacteur T pour des opérations de maintenance, on place le capot mobile 41 en position de « jet inversé » (Figure 3), on déverrouille la partie inférieure 47 de ce capot mobile des deux moitiés supérieures 45a, 45b, on désolidarise l'actionneur inférieur 53 de cette partie inférieure 47 de capot mobile, on dépose cette partie inférieure de capot mobile, on ouvre les deux moitiés inférieures 61a, 61 b de la structure de support de grilles 39 (Figure 10), on dépose le panneau 67, on déconnecte les bielles de reprise de poussée 29a, 29b, (Figure 2), on lève par des moyens de palan appropriés le turboréacteur T pour soulager les suspensions 15, 17 (voir Figure 2), on déconnecte les suspensions avant et arrière, puis on dépose le turboréacteur.

Dans le cas où les deux moitiés supérieures 45a, 45b du capot 41 sont reliées entre elles par un cadre 55 (voir Figure 8), il est nécessaire de prévoir la dépose de ces deux moitiés supérieures 45a, 45b, pour pouvoir déposer le turboréacteur.

Comme on peut le comprendre à la lumière de la description qui précède, le fait de prévoir une partie caissonnée 19 dans le mât de liaison 9 permet d'envelopper les bielles de reprise de poussée (29a, 29b) et ainsi de protéger celles-ci vis-à-vis des fortes chaleurs émisses par le générateur de gaz 5.

On peut en particulier prévoir de protéger la paroi centrale inférieure 25 de la partie caissonnée 19. au moyen d'une tôle de titane ou d'acier inoxydable de manière à augmenter l'effet de protection thermique.

La partie caissonnée 19 permet ainsi de protéger les bielles de reprise de poussée 29a, 29b vis-à-vis d'une chaleur excessive, ce qui permet de réaliser ces bielles dans des matériaux plus légers (titane, aluminium ou matériaux composites) que les alliages en acier utilisés habituellement.

On notera par ailleurs que la partie caissonnée 19, présentant une forte inertie de torsion, permet de reprendre de manière optimale le moment du turboréacteur T autour de son axe : ceci permet en particulier de réduire le dimensionnement du point de suspension arrière 33 (Figure 1) du turboréacteur T au mât 9.

On notera que le bouclier thermique constitué par la partie caissonnée 19 permet avantageusement d'envisager de fabriquer la partie supérieure du mât 9, et en particulier la partie de liaison 11 et la partie centrale 21, dans des matériaux moins résistants thermiquement mais plus légers que les alliages métalliques utilisés habituellement, tels que des matériaux composites.

Bien entendu, la présente invention n'est nullement limitée au mode de réalisation décrit et représenté, fourni à titre de simple exemple.

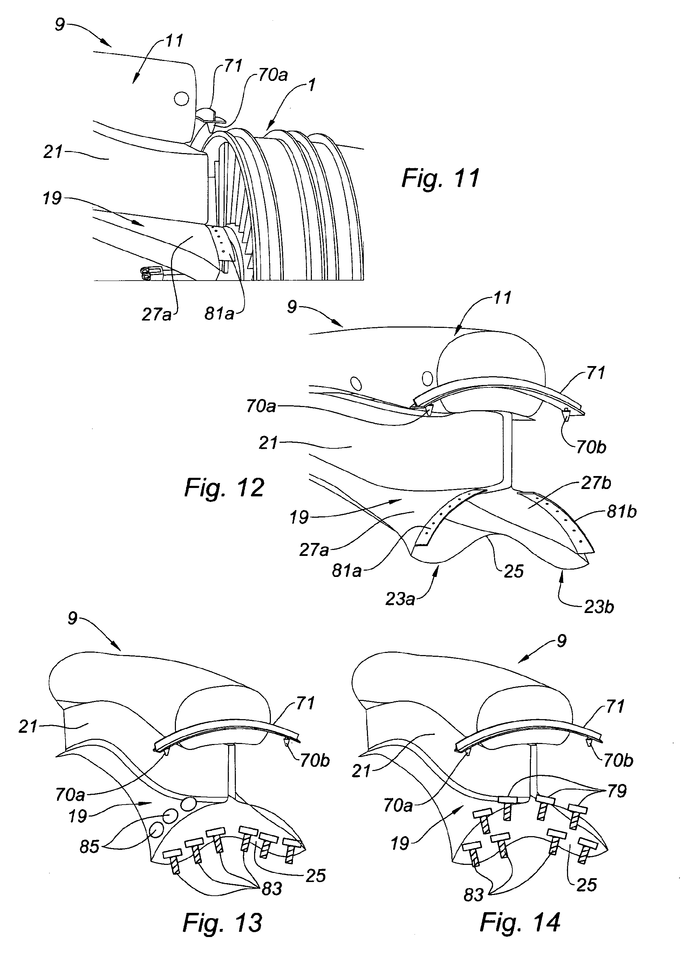

C'est ainsi que l'on a représenté, sur les figures 11 à 15, un autre mode de réalisation de la jonction du mât 9 au turboréacteur T.

Comme cela est visible sur ces figures, contrairement au mode de réalisation précédent, il n'y a plus de ferrure de fixation sur le bord aval 13 du carter de soufflante, ni de bielles de reprise de poussée fixées sur la partie amont du générateur de gaz 5 : ces pièces sont respectivement remplacées par une paire de cônes 70a, 70b solidaires d'une traverse incurvée 71 elle-même fixée sur la partie de liaison 11 du mât 9, ces cônes coopérant avec le carter de soufflante 1 de façon à permettre un montage même en cas d'un léger désalignement du mât par rapport au turboréacteur, et par des boulons 79 aptes à relier des platines 81 a, 81 b solidaires des deux parties latérales supérieures 27a, 27b du caisson 19 du mât 9, à la partie amont du générateur de gaz 5.

Comme cela est visible notamment sur les figures 13 et 14, on peut avantageusement prévoir une rangée supplémentaire de boulons 83 aptes à relier la paroi centrale inférieure 25 du caisson 19 à la partie amont du générateur de gaz 5.

Comme cela est visible en particulier sur la figure 13, on peut avantageusement prévoir des trappes 85, formées sur les parties latérales supérieures 27a, 27b du caisson 19, permettant l'accès aux boulons 83.

Les boulons 79 et 83 pourront avantageusement être disposés en quinconce, de façon à optimiser la répartition des contraintes entre les faces 25 et 27a et 27b de la partie caissonnée, comme cela est visible sur la figure 14.

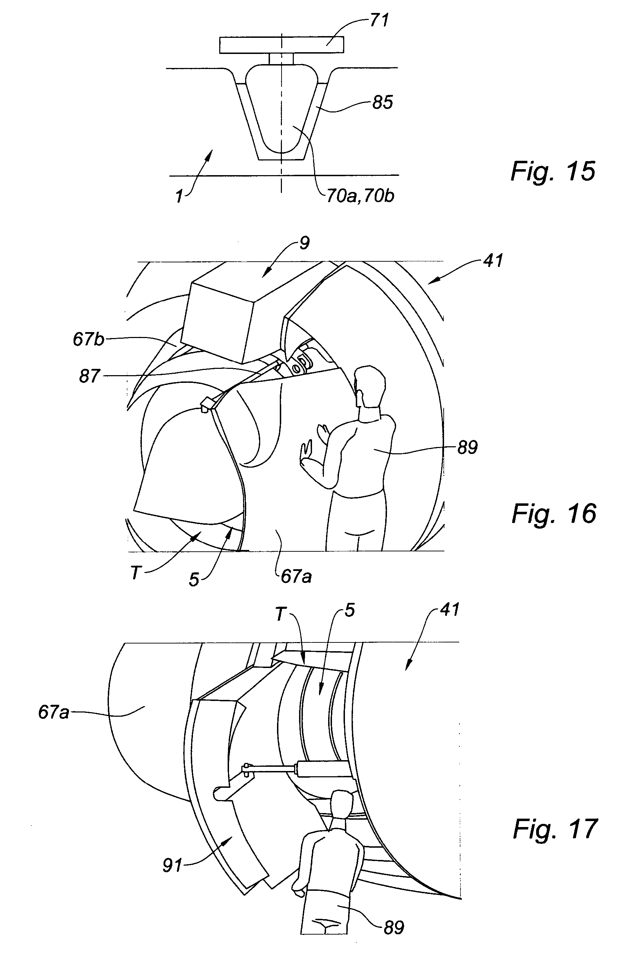

De préférence, et comme cela est visible sur la figure 15 où l'on a représenté la zone de coopération de l'un des cônes 70a, 70b avec le carter de soufflante 1, on prévoit un matériau souple 85 entre les cônes 70a, 70b et le carter de soufflante 1 : ceci permet d'une part un meilleur centrage du mât 9 par rapport au carter 1 en cas de désalignement de ces deux parties, et d'autre part une filtration des vibrations du turboréacteur T.

On notera que les cônes 70a, 70b permettent une reprise des efforts axiaux et latéraux du turboréacteur T, ceci sans surcharger la suspension arrière du mât 9. Ceci permet en particulier de limiter le moment de flexion induit dans le carter du générateur de gaz 5 par les efforts aérodynamiques appliqués à l'entrée d'air dans certaines phases de vol.

Ces préceptes pourraient également être appliqués à une nacelle comprenant un inverseur de poussée. à portes, comme cela est représenté sur les figures 16 et 17.

Dans ce cas, et comme cela est visible sur la figure 16, le panneau 67 ainsi qu'éventuellement les deux demi-panneaux 63a et 63b pourraient être remplacés par un système unique de deux demi panneaux 67a et 67b indépendants droite et gauche, s'écartant du moteur avant de reculer grâce à un ensemble de bielles 87 et de glissières comme cela est enseigné par la demande française 08/00501 déposée par la demanderesse, les glissières pouvant en l'occurrence être fixées au mât caissonné 9 selon la présente invention.

Une fois que les demi-panneaux 67a et 67b ont été coulissés vers l'arrière de la nacelle, comme cela est visible sur la figure 17, un opérateur 89 peut accéder au générateur de gaz 5 en passant par une porte 91 de l'inverseur.

L'inverseur de poussée pourrait également être du type à veine de flux secondaire en S, comme cela est enseigné par exemple par la demande française 06/04113.

Dans ce cas, la structure interne fixe de la nacelle pourrait comprendre deux demi-panneaux articulés sur le mât 9 dans la zone des parois latérales supérieures 27a, 27b de la partie caissonnée 19, et l'ensemble formé par les grilles d'inversion de poussée (et par leurs cadres associés) et par le capot mobile de l'inverseur de poussée pourrait se présenter en deux moitiés montées chacune coulissante sur un rail monté lui-même pivotant sur le mât 9.

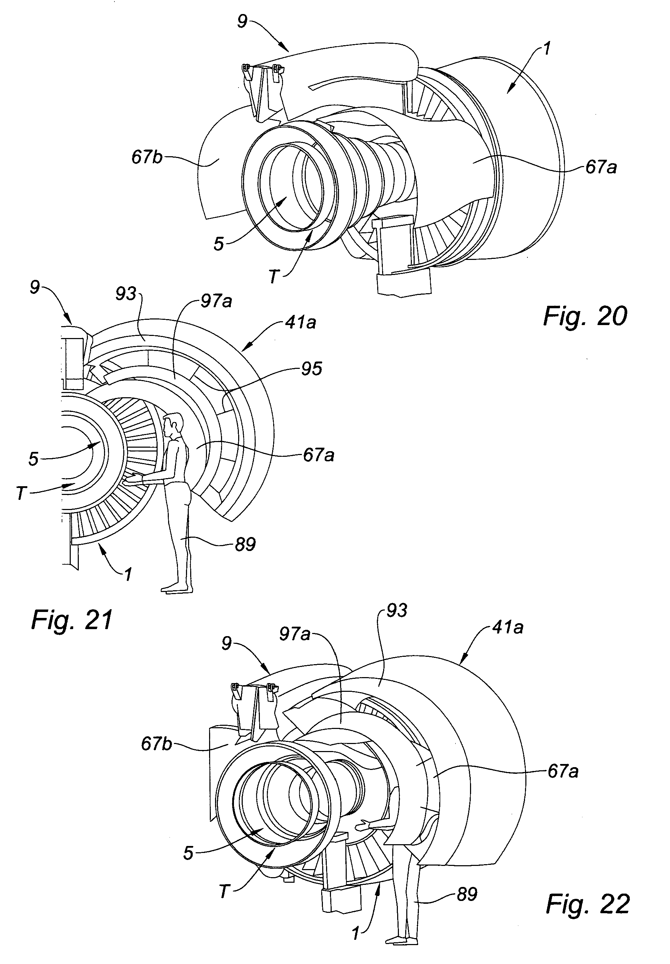

Dans ce cas, pour accéder au générateur de gaz 5, on ouvrirait successivement la moitié de capot mobile et la moitié de structure fixe concernées, par pivotement autour du mât 9 (comme cela est représenté à la figure 20).

Dans leurs parties inférieures, les deux moitiés de capot mobile peuvent être reliées directement entre elles par des verrous, ou bien être montées coulissantes sur deux rails eux-mêmes reliés entre eux par des verrous.

L'inverseur de poussée pourrait encore être conforme aux demandes de brevet françaises 08/04295 et 07/07048 déposées par la demanderesse : c'est-à-dire que des volets d'inversion de poussée 93 sont installés sur le bord de fuite du capot mobile, et actionnés par des bielles 95 reliées à la structure interne fixe de la nacelle, sous l'effet du coulissement du capot mobile.

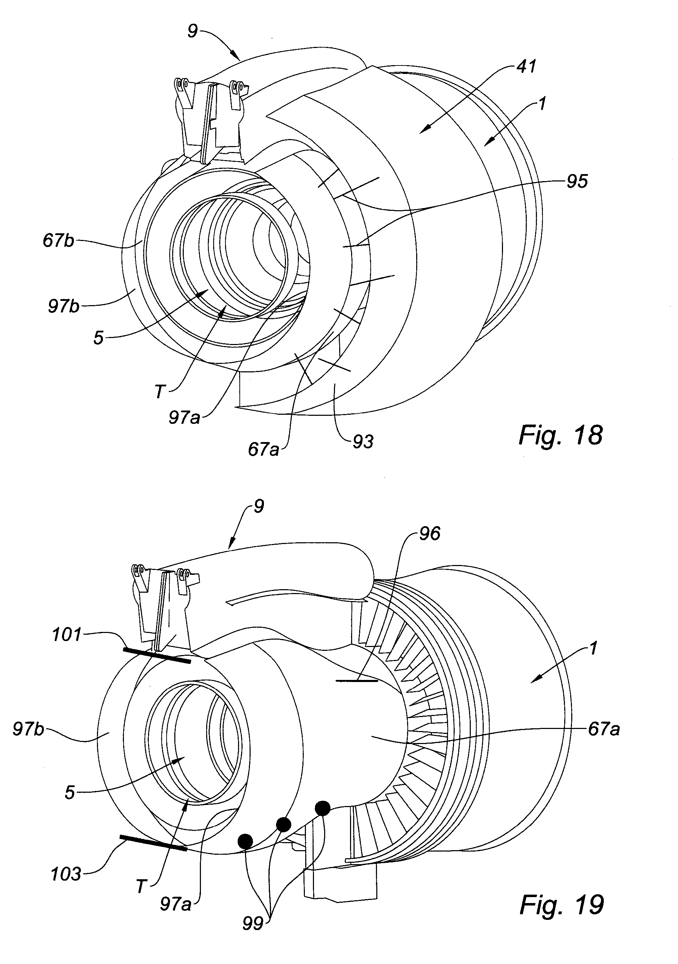

Plus précisément, cette structure interne peut comprendre deux demi-panneaux 67a, 67b articulés sur le mât 9 comme dans le cas précédent, chacun autour d'un axe (dont l'un 96 est visible sur la figure 19), et une partie aval annulaire elle-même formée de deux demi-anneaux 97a, 97b.

Des verrous inférieurs 99 permettent de relier entre eux les deux demi-panneaux 67a, 67b.

Des verrous supérieur 101 et inférieur 103 permettent de relier entre eux les deux demi-anneaux 97a et 97b.

Les parties de liaison des demi-panneaux 67a, 67b avec la zone amont du générateur de gaz 5 sont du type couteaux/cannelures.

Dans le cas où l'on souhaite que la partie annulaire aval 97a, 97b contribue elle-même à la rigidité en flexion des carter du générateur de gaz 5, on peut envisager que chacun des deux demi-anneaux 97a, 97b soit également relié au générateur de gaz 5 par des moyens du type couteaux/cannelures, ou par tout autre moyen adapté (bielles par exemple).

La figure 20 permet de voir les deux demi-panneaux 67a, 67b en position d'ouverture pour maintenance, dégageant ainsi l'accès au générateur de gaz 5.

Les figures 21 et 22, sur lesquelles on voit un opérateur 89 en train d'intervenir sur le générateur de gaz 5, permettent également de visualiser le demi-panneau 67a et le demi-capot mobile 41 a en position d'ouverture.

Comme cela est visible sur ces figures, le demi-capot mobile 41 a (et son symétrique non représenté) est monté coulissant sur un rail (non visible) lui-même monté pivotant sur le mât 9 (comme indiqué à propos du mode de réalisation précédent).

On notera que, du fait de la liaison du demi-anneau 97a au demi-capot mobile 41 a par l'intermédiaire des bielles 95, l'ouverture de ce demi-capot mobile a pour effet d'entraîner celle de ce demi-anneau, libérant ainsi complètement l'accès au générateur de gaz 5 pour l'opérateur 89.

On notera que, dans l'ensemble des modes de réalisation exposés ci-dessus, le surcroît de rigidité conféré à la structure interne fixe par la partie en Y du caisson 19, ainsi que le ceinturage réalisé par la partie annulaire aval de cette structure interne, confère un surcroît de rigidité en flexion aux carters du générateur de gaz 5 du turboréacteur T, et permet une meilleure résistance de cette structure interne vis-à-vis de l'augmentation de pression causée par un possible éclatement de la tuyauterie située à la périphérie du générateur de gaz 5.

Les préceptes exposés dans l'ensemble de la description qui précède pourraient aussi être appliqués à une nacelle lisse, c'est-à-dire à une nacelle ne comportant pas de dispositif d'inversion de poussée.

## Revendications

1. Nacelle d'aéronef comprenant un mât (9) adapté pour supporter un turboréacteur d'aéronef, le mât (9) présentant d'une part une partie de liaison (11) entre le carter (1) de soufflante (3) ou le carter du générateur de gaz (5) dudit turboréacteur et une aile dudit aéronef, et d'autre part une partie caissonnée solidaire de ladite partie de liaison (11 ), **caractérisée en ce que** la partie caissonnée présente sensiblement une section en Y (19), dont une partie centrale (21) bifurque en deux parties (23a, 23b) définissant les deux branches du Y, la partie caissonnée étant adaptée pour former la partie supérieure de la structure interne fixe de ladite nacelle au moyen des deux parties (23a, 23b) définissant les deux branches du Y.

2. Nacelle selon la revendication 1, **caractérisé en ce que** ladite partie caissonnée (19) comprend des orifices de ventilation.

3. Nacelle selon l'une des revendications 1 ou 2, **caractérisé en ce que** ladite partie de liaison (11) comprend une traverse (71) supportant des cônes (70a, 70b) de liaison avec ledit carter (1) de soufflante (3).

4. Nacelle selon l'une quelconque des revendications précédentes, **caractérisé en ce que** ladite partie caissonnée (19) comporte des platines (81 a, 81 b) de liaison audit générateur de gaz (5).

5. Nacelle selon l'une des revendications 1 ou 2 incorporant un mât (9) dans sa partie aval, dans laquelle la partie de liaison (11) du mât (9) est adaptée pour être fixée sur ledit carter (1) de soufflante (3) ou sur ledit carter du générateur de gaz (5), et des bielles de reprise de poussée (29a, 29b) s'étendent à l'intérieur de la partie caissonnée (19) de ce mât (9) pour coopérer avec ledit carter de générateur de gaz (5).

6. Nacelle selon les revendications 3 et 4 incorporant un mât (9) dans sa partie aval, dépourvue de bielles de reprise de poussée à l'intérieur de ladite partie caissonnée (19).

7. Nacelle selon l'une des revendications 5 ou 6, dans laquelle ladite partie aval comprend un inverseur de poussée à grilles.

8. Nacelle selon la revendication 7, dans laquelle ledit inverseur comprend une structure de support de grilles (39) comprenant deux moitiés supérieures (57a, 57b) fixées sur ledit carter de soufflante (1) et reliées entre elles par des bielles (59) traversant la partie de liaison (11) dudit mât (9).

9. Nacelle selon la revendication 8, dans laquelle ladite structure de support de grilles (39) comprend en outre deux moitiés inférieures (61 a, 61 b) montées pivotantes sur lesdites moitiés supérieures (57a, 57b) entre une position de service et une position de maintenance.

10. Nacelle selon la revendication 9, dans laquelle lesdites moitiés inférieures (61 a, 61 b) incorporent des panneaux amonts (63a, 63b) définissant la partie inférieure amont de la structure interne fixe de la nacelle, en complément de ladite partie caissonnée (19).

11. Nacelle selon la revendication 10, comprenant en outre un panneau quasi-annulaire (67) définissant la partie inférieure aval de la structure interne fixe de la nacelle, ce panneau étant monté coulissant sur ladite partie caissonnée (19) entre une position de service dans laquelle il est jointif avec lesdits panneaux amonts (63a, 63b), et une position de maintenance dans laquelle il est écarté en aval desdits panneaux amonts (63a, 63b).

12. Nacelle selon l'une quelconque des revendications 7 à 11, comprenant un capot (37) monté coulissant sur la partie de liaison (11) dudit mât (9) entre une position de jet direct, dans laquelle ce capot (37) recouvre lesdites grilles, et une position de jet inversé, dans laquelle ce capot (37) découvre ces grilles.

13. Nacelle selon la revendication 12, dans laquelle ledit capot (37) comprend deux moitiés supérieures (45a, 45b) montées coulissantes sur la partie de liaison (11) dudit mât (9), coopérant avec au moins deux actionneurs supérieurs (51 a, 51 b), et une partie inférieure (47) montée coulissante sur lesdites moitiés supérieures (45a, 45b) entre une position amont de service et une position aval de maintenance.

14. Nacelle selon la revendication 13, comprenant un actionneur inférieur (53) coopérant avec ladite partie inférieure de capot (47).

15. Nacelle selon la revendication 13, comprenant un cadre (55) reliant entre elles lesdites deux moitiés supérieures de capot (45a, 45b) et un actionneur inférieur (53) coopérant avec ce cadre (55).

16. Nacelle selon l'une des revendications 5 ou 6, comprenant un inverseur de poussée à portes (91) comprenant deux demi-panneaux (67a, 67b) définissant la structure interne fixe de la nacelle, ces demi-panneaux étant mobiles entre une position de service et une position de maintenance au moyen d'un système de bielles (87) et de glissières.

17. Nacelle selon la revendication 7, du type à veine de flux secondaire en S, comprenant deux demi-panneaux de structure interne articulés sur ledit mât (9) et deux demi-capots-mobiles montés coulissants sur des rails montés eux-mêmes pivotants sur ledit mât (9).

18. Nacelle selon la revendication 7, comprenant deux demi-panneaux (67a, 67b) et deux demi-anneaux (97a, 97b) définissant la structure interne fixe de la nacelle, et deux demi-capots mobiles (41 a, 41 b) munis de volets d'inversion de poussée (93) sur leurs bords de fuite, reliés par des bielles (95) auxdits demi-anneaux (97a, 97b), lesdits demi-panneaux (67a, 67b) étant articulés sur ledit mât (9), et les ensembles formés par lesdits demi-capots mobiles (41 a, 41 b) et par lesdits demi-anneaux (97a, 97b) étant montés coulissants sur des rails montés eux-mêmes pivotants sur ledit mât (9).

19. Ensemble propulsif comprenant une nacelle selon l'une quelconque des revendications 5 à 18, et un turboréacteur logé à l'intérieur de cette nacelle et coopérant avec la partie ledit mât (9).

## Patentansprüche

1. Triebwerksgondel eines Luftfahrzeugs mit einem Mast (9) der dafür angepasst ist, um die Strahlturbine des Luftfahrzeugs zu tragen, der Mast (9) stellt an einer Seite eine Verbindungsstelle (11) zwischen dem Gehäuse (1) des Fans (3) oder dem Gehäuse des Gasgenerators (5) der genannten Strahlturbine und der Flügel der genannten Luftfahrzeug dar und hat auf der anderen Seite einen kastenförmigen Teil fest verbunden mit der genannten Verbindungsstelle (11), **dadurch gekennzeichnet, dass** der kastenförmige Teil ein deutliches Y-Profil (19) zeigt, dessen mittlerer Teil (21) sich gabelförmig in zwei Teile (23a, 23b) aufteilt, die die beiden Zweige des Y ausmachen; der kastenförmige Teil ist dafür angepasst, das obere Bereich der festen internen Struktur der genannten Triebwerksgondel mithilfe der beiden Zweige (23a, 23b) des Y-Profils zu bilden.

2. Triebwerksgondel gemäß Anspruch 1 deren kastenförmiger Teil (19) Lüftungsöffnungen enthält.

3. Triebwerksgondel gemäß Anspruch 1 oder 2, deren genannte Verbindungsstelle (11) eine Querstrebe (71) enthält, die die Verbindungskonusse (70a, 70b) mit dem erwähnten Fan-Gehäuse (3, 1) trägt.

4. Triebwerksgondel gemäß einem der vorgenannten Ansprüche, bei der der kastenförmige Teil (19) Verbindungsplatinen (81a, 81b) für die Verbindung mit dem Gehäuse des genannten Gasgenerators (5) hat.

5. Triebwerksgondel gemäß einem der Ansprüche 1 oder 2 zu der, in seinem stromabwärts gelegenen Abschnitt, ein Mast (9) gehört. Die Verbindungsstelle (11) des Masts (9) ist so eingestellt, dass sie auf dem Fan-Gehäuse (3, 1) oder auf dem genannten Gehäuse des Gasgenerators (5) befestigt werden kann. Schubaufnahmestangen (29a, 29b) erstrecken sich in den kastenförmigen Teil (19) des Masts (9) um mit dem Gasgenerator (5) zusammen zu wirken.

6. Triebwerksgondel gemäß den Ansprüchen 3 und 4 zu der, in seinem stromabwärts gelegenen Abschnitt, ein Mast (9) gehört dessen kastenförmigem Teil (19) keine Schubaufnahmestangen enthält.

7. Triebwerksgondel nach einem der Ansprüche 5 oder 6, deren genannter stromabwärts gelegenen Abschnitt eine Schubumkehrvorrichtung mit Gittern enthält.

8. Triebwerksgondel gemäß Anspruch 7, wobei die Schubumkehrvorrichtung eine tragende Gitterstruktur (39) mit zwei oberen Hälften (57a, 57b) hat, die am Fan-Gehäuse (1) befestigt sind und miteinander durch Stangen (59) verbunden werden, welche die Verbindungsstelle (11) des Masts (9) durchdringen.

9. Triebwerksgondel gemäß Anspruch 8, wobei die genannte tragende Gitterstruktur (39) außerdem zwei untere Hälften (61a, 61b) hat, schwenkbar befestigt auf den beiden genannten oberen Hälften (57a, 57b), für eine Betriebs- und eine Wartungsstellung.

10. Triebwerksgondel gemäß Anspruch 9, wobei die genannten unteren Hälften (61a, 61b) zwei vorgelagerte Scheiben (63a, 63b) enthalten, welche den vorgelagerten unteren Teil der festen inneren Struktur der Gondel bestimmen und so den kastenförmigen Teil (19) ergänzen.

11. Triebwerksgondel gemäß Anspruch 10, über dies mit einer quasi ringförmigen Scheibe (67), die den unteren Teil der festen inneren Struktur der Gondel bestimmt; diese Scheibe ist auf den genannten kastenförmigen Teil (19) gleitend montiert und lässt sich in eine Betriebsposition, fugendicht verbunden mit den beiden vorgelagerten Scheiben (63a, 63b), oder eine Wartungsposition, auseinanderstehend unterhalb der beiden vorgelagerten Scheiben (63a, 63b).

12. Triebwerksgondel gemäß einem der Ansprüche 7 bis 11 mit einer auf der Verbindungsstelle (11) des Masts (9) gleitend montierten Haube (37), verstellbar zwischen einer Position für den direkten Düsenstrahl in der die Haube (37) die genannte Gitterstruktur abdeckt, und einer Position des umgekehrten Düsenstrahls in der die Haube (37) die Gitter freilegt.

13. Triebwerksgondel gemäß Anspruch 12 deren Haube (37) zwei obere Hälften (45a, 45b) hat, die verstellbar auf der Verbindungsstelle (11) des Masts (9) gleitend montiert sind und mit mindestens zwei oberen Stellgliedern (51a, 51b) verbunden sind, und einem unteren Bereich (47), verstellbar auf diesen beiden oberen Hälften (45a, 45b) gleitend montiert, zwischen einer stromaufwärtigen Betriebsposition und einer stromabwärtigen Wartungsposition.

14. Triebwerksgondel gemäß Anspruch 13 mit einem tieferliegenden Stellglied (53), das mit dem genannten unteren Teil (47) der Hülle zusammenwirkt.

15. Triebwerksgondel gemäß Anspruch 13 mit einem Rahmen (55) der die beiden oberen Hälften (45a, 45b) der Haube miteinander verbindet und mit einem tieferliegenden Stellglied (53), das mit dem Rahmen (55)zusammenwirkt.

16. Triebwerksgondel gemäß Anspruch 5 oder 6 mit einer Schubumkehrvorrichtung (91) aus zwei Halb-Platten (67a, 67b) welche die innere, feste Struktur der Gondel ausmachen. Diese beiden Halb-Platten lassen sich mithilfe eines Systems aus Schubstangen (87) und Führungsschienen zwischen einer Betriebs- und einer Wartungsposition bewegen.

17. Triebwerksgondel gemäß Anspruch 7 bei der, der Nebenstrom S-förmig verläuft, mit zwei Halb-Scheiben interner Struktur, mit dem genannten Mast (9) verbunden, und zwei halben, gleitend beweglichen Ummantelungen, die auf schwenkbaren auf dem genannten Mast (9) montierten Schienen befestigt sind.

18. Triebwerksgondel gemäß Anspruch 7 mit zwei halben Platten (67a, 67b) und zwei Halbringen (97a, 97b) welche die feste innere Struktur der Gondel bestimmen, und zwei beweglichen halben Hüllen (41a, 41b), ausgestattet mit Klappen zur Schubumkehr (93) auf ihren Austrittskanten, verbunden durch Pleuelstangen (95) mit den genannten Halbringen (97a, 97b); die genannten halben Platten (67a, 67b) sind mit dem genannten Mast (9) verbunden und die Einheiten aus den genannten beweglichen halben Hüllen (41a, 41b) und den erwähnten Halbringen (97a, 97b) sind gleitend auf Schienen montiert, welche sich wiederum schwenkbar auf dem genannten Mast (9) montiert sind.

19. Antriebseinheit mit einer Gondel gemäß einer der Ansprüche 5 bis 18 und eine Strahlturbine die sich im Inneren dieser Gondel befindet und mit dem Mast (9) genannten Teil zusammenwirkt.

## Claims

1. Aircraft nacelle comprising a mast (9) adapted to support an aircraft turbojet engine, the mast (9) having on the one hand a connecting portion (11) between the casing (1) of the fan (3) or the casing of the gas generator (5) of said turbojet engine and a wing of said aircraft, and on the other hand a box portion integral with said connecting portion (11), **characterised in that** the box portion has substantially a Y-shaped section (19), the central portion (21) of which branches off into two parts (23a, 23b) defining the two branches of the Y shape, the box portion being adapted to form the upper part of the fixed internal structure of said nacelle by means of the two parts (23a, 23b) defining the two branches of the Y shape.

2. The nacelle according to Claim 1, **characterised in that** said box portion (19) comprises ventilation ports.

3. The nacelle according to any of Claims 1 or 2, **characterised in that** said connecting portion (11) comprises a cross beam (71) supporting cones (70a, 70b) for connection to said casing (1) of the fan (3) .

4. The nacelle according to any one of the preceding claims, **characterised in that** said box portion (19) comprises plates (81 a, 81 b) for connection to said gas generator (5).

5. The nacelle according to one of Claims 1 or 2 incorporating a mast (9) in its downstream portion, wherein the connecting portion (11) of the mast (9) is adapted to be fixed on said casing (1) of the fan (3) or on said gas generator casing (5), and thrust recovery rods (29a, 29b) extending inside the box portion (19) of this mast (9) to cooperate with said gas generator casing (5).

6. The nacelle according to Claims 3 and 4 incorporating a mast (9) in its downstream portion, devoid of thrust recovery rods inside said box portion (19).

7. The nacelle according to any of Claims 5 or 6, wherein said downstream portion comprises a vane-type thrust reverser.

8. The nacelle according to Claim 7, wherein said reverser comprises a vanes support structure (39) comprising two upper halves (57a, 57b) fixed on said fan casing (1) and connected to each other by rods (59) passing through the connecting portion (11) of said mast (9) .

9. The nacelle according to Claim 8, wherein said vanes support structure (39) further comprises two lower halves (61a, 61b) pivotally mounted on said upper halves (57a, 57b) between an operating position and a maintenance position.

10. The nacelle according to Claim 9, wherein said lower halves (61a, 61b) incorporate upstream panels (63a, 63b) defining the lower upstream portion of the fixed internal structure of the nacelle, in addition to said box portion (19).

11. The nacelle according to Claim 10, further comprising a quasi-annular panel (67) defining the lower downstream portion of the fixed internal structure of the nacelle, this panel being slidably mounted on said box portion (19) between an operating position wherein it is joined with said upstream panels (63a, 63b), and a maintenance position wherein it is spaced downstream from said upstream panels (63a, 63b).

12. The nacelle according to any one of Claims 7 to 11, comprising a cowl (37) slidably mounted on the connecting portion (11) of said mast (9) between a direct jet position, wherein this cowl (37) covers said vanes, and a reverse jet position, wherein this cowl (37) uncovers these vanes.

13. The nacelle according to Claim 12, wherein said cowl (37) comprises two upper halves (45a, 45b) slidably mounted on the connecting portion (11) of said mast (9), cooperating with at least two upper actuators (51a, 51b), and a lower portion (47) sidably mounted on said upper halves (45a, 45b) between an operating upstream position and a maintenance downstream position.

14. The nacelle according to Claim 13, comprising a lower actuator (53) cooperating with said lower portion of the cowl (47).

15. The nacelle according to Claim 13, comprising a frame (55) connecting with each other said two upper halves of the cowl (45a, 45b) and a lower actuator (53) cooperating with this frame (55).

16. The nacelle according to any of Claims 5 or 6, comprising a door-type thrust reverser (91) comprising two half-panels (67a, 67b) defining the fixed internal structure of the nacelle, these half-panels being movable between an operating position and a maintenance position by means of a system of rods (87) and slides.

17. The nacelle according to Claim 7, of the S-shaped bypass flow path-type, comprising two half-panels of internal structure hinged on said mast (9) and two movable half-cowls slidably mounted on rails which are pivotably mounted on said mast (9).

18. The nacelle according to Claim 7, comprising two half-panels (67a, 67b) and two half-rings (97a, 97b) defining the fixed internal structure of the nacelle, and two movable half-cowls (41a, 41b) fitted with thrust reverser flaps (93) on their trailing edges, connected with rods (95) to said half-rings (97a, 97b), said half-panels (67a, 67b) being hinged on said mast (9), and the assemblies formed by said movable half-cowls (41a, 41b) and said half-rings (97a, 97b) being slidably mounted on rails which are pivotably mounted on said mast (9).

19. Propulsion assembly comprising a nacelle according to any one of Claims 5 to 18, and a turbojet engine accommodated inside this nacelle and cooperating with the portion of said mast (9).
